# EUROPÄISCHE PATENTANMELDUNG

(11) **EP 2 532 722 A1**
(43) Veröffentlichungstag der Anmeldung: **12.12.2012**
(21) Anmeldenummer: 11169185.3
(22) Anmeldetag: 08.06.2011
(51) Int. Cl.: C09D 163/00, C09J 163/00, C09D 5/00, C08G 59/50

(54) **Water based epoxy resin adhesion promoter compositions.**

(71) Anmelder: Sika Technology AG, 6340 Baar (CH)
(72) Erfinder: Burckhardt, Urs, 8049 Zürich (CH); Corsaro, Antonio, 8105 Regensdorf (CH); Huck, Wolf-Rüdiger, 8044 Gockhausen (CH); Fässler, Reto, 8048 Zürich (CH)
(74) Vertreter: Sika Patent Attorneys

(57) **Zusammenfassung**

Die vorliegende Erfindung betrifft eine Haftvermittlerzusammensetzung enthaltend
- mindestens eine wässrige Dispersion eines Epoxid-Festharzes;
- mindestens ein Polyamin; sowie
- mindestens eine Verbindung **V** in freier oder hydrolytisch freisetzbarer

Form, welche mit dem Polyamin eine Kondensationsreaktion eingehen kann. Erfindungsgemässe Haftvermittlerzusammensetzungen führen zu einer Verbesserung der Haftung unter feuchtwarmen Bedingungen.

## Beschreibung

### Technisches Gebiet

Die Erfindung betrifft das Gebiet der Haftvermittlerzusammensetzungen und deren Verwendung als Voranstriche für Kleb- und Dichtstoffe.

### Stand der Technik

Haftvermittlerzusammensetzungen werden schon seit längerem eingesetzt, um die Haftung von Kleb- und Dichtstoffen auf unterschiedlichen Untergründen zu verbessern. Besonders hohe Anforderungen an die Haftung stellen sich dabei an Verklebungen in der Automobilindustrie, wodurch der Einsatz von Haftvermittlerzusammensetzungen in diesem Bereich weit verbreitet ist.

Solche Haftvermittlerzusammensetzungen enthalten als Lösemittel typischerweise flüchtige organische Verbindungen (VOC), welche bei der Applikation verdampfen und aus Gründen des Umwelt-, Gesundheits- und Arbeitsschutzes nachteilig sind. Es wird deshalb versucht, lösemittelhaltige Haftvermittlerzusammensetzungen durch wässrige zu ersetzen. Wässrige Haftvermittlerzusammensetzungen neigen allerdings dazu, unter feuchtwarmen Bedingungen, beispielsweise bei Kataplasma-Lagerung, ihre Haftung im Klebeverbund wieder zu verlieren. Eine wässrige Haftvermittlerzusammensetzung mit vergleichsweise guter Beständigkeit unter feuchtwarmen Bedingungen ist beispielsweise in WO 2008/037780 beschrieben. Sie stellt ein Zweikomponentensystem bestehend aus einer Epoxidharzdispersion und einem Aminhärter dar. Bei längerer Kataplasma-Lagerung zeigt jedoch auch diese Haftvermittlerzusammensetzung Haftverlust.

### Darstellung der Erfindung

Aufgabe der vorliegenden Erfindung ist es daher, eine Haftvermittlerzusammensetzung bereitzustellen, welche keine oder nur unwesentlich flüchtige organische Verbindungen freisetzt und gleichzeitig nicht zu einem Verlust der Haftung unter feuchtwarmen Bedingungen führt.

Diese Aufgabe wird durch eine erfindungsgemässe Haftvermittlerzusammensetzung nach Anspruch 1 gelöst.

Überraschenderweise und entgegen der Erwartung, dass Verbindungen V durch Abblocken von reaktiven Aminogruppen die Vernetzungsdichte der Haftvermittlerzusammensetzung herabsetzen würden, wodurch diese erweichen und quellen könnte, was wiederum gerade bei Belastung des Klebeverbunds unter feuchtwarmen Bedingungen zu Haftverlust sowie zu erhöhtem Auftreten von Korrosion führen könnte, wurde gefunden, dass der Einsatz von spezifischen Verbindungen als Zusatzstoffe in der Haftvermittlerzusammensetzung deren Beständigkeit unter feuchtwarmen Bedingungen signifikant verbessert.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Haftvermittlerzusammensetzung enthaltend
- mindestens eine wässrige Dispersion eines Epoxid-Festharzes;
- mindestens ein Polyamin; sowie
- mindestens eine Verbindung V in freier oder hydrolytisch freisetzbarer Form, welche mit dem Polyamin eine Kondensationsreaktion eingehen kann.

Mit "Poly" beginnende Substanznamen wie Polyamin oder Polyisocyanat bezeichnen im vorliegenden Dokument Substanzen, die formal zwei oder mehr der in ihrem Namen vorkommenden funktionellen Gruppen pro Molekül enthalten.

Entsprechend werden im vorliegenden Dokument als "Polyamin" Verbindungen verstanden, welche zwei oder mehr Aminogruppen aufweisen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Als "Kataplasma-Lagerung" wird hier die Lagerung eines Probekörpers bei einer Temperatur von 70 °C und einer relativen Luftfeuchtigkeit von 100% bezeichnet.

Unter "Molekulargewicht" versteht man im vorliegenden Dokument stets das Molekulargewichtsmittel Mₙ (Zahlenmittel).

Beim Epoxid-Festharz der wässrigen Dispersion handelt es sich insbesondere um ein Epoxid-Festharz der Formel (I).

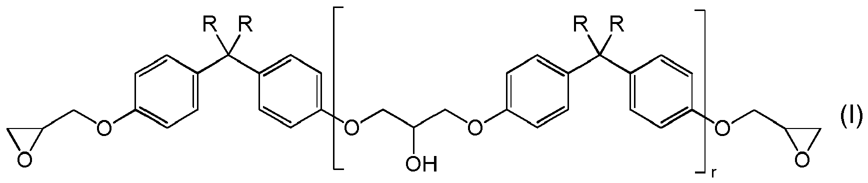

Hierbei stehen die Substituenten R unabhängig voneinander entweder für ein Wasserstoffatom oder eine Methylgruppe. Weiterhin steht der Index r für einen Wert von > 1, insbesondere von ≥ 1.5. Bevorzugt steht r für einen Wert von 2 bis 12.

Typischerweise weist ein Epoxid-Festharz eine Glasübergangstemperatur auf, welche oberhalb der Raumtemperatur von etwa 23 °C liegt. Epoxid-Festharze lassen sich somit bei Raumtemperatur zu schüttfähigen Pulvern zerkleinern.

Derartige Epoxid-Festharze sind als solche oder bereits in dispergierter Form beispielsweise kommerziell erhältlich von Dow Chemical Company, USA, von Huntsman International LLC, USA, oder von Hexion Specialty Chemicals Inc, USA.

Weiterhin geeignet sind beispielsweise Epoxid-Festharze, welche zumindest teilweise N-Glycidylgruppen an Stelle von Glycidylethergruppen aufweisen, sowie Epoxidharze auf Basis von aliphatischen Glycidylethern.

Ebenfalls eignen sich Epoxid-Festharze aus der Gruppe der Phenolharze, insbesondere Phenol- oder Kresolnovolake.

Gegebenenfalls enthält die wässrige Dispersion eines Epoxid-Festharzes weitere Bestandteile, wie beispielsweise Epoxid-Flüssigharze, Emulgatoren, Co-Emulgatoren, Entschäumer, Biocide, Pigmente, Füllstoffe, Reaktivverdünner oder Katalysatoren.

Die wässrige Dispersion eines Epoxid-Festharzes weist vorzugsweise einen Gehalt an Epoxid-Festharz von 30 bis 80 Gew.-%, insbesondere 50 bis 70 Gew.-%, auf. Entsprechend weist die wässrige Dispersion eines Epoxidharzes insbesondere etwa 20 bis 70 Gew.-% Wasser auf.

Die mittlere Teilchengrösse der dispergierten Partikel aus Epoxid-Festharz in der Dispersion liegt insbesondere im Bereich von 0.05 bis 20 µm, insbesondere 0.1 bis 10 µm, besonders bevorzugt 0.2 bis 5 µm.

Beispielweise sind geeignete wässrige Dispersionen eines Epoxid-Festharzes unter dem Handelsnamen Waterpoxy^{®} 1422 kommerziell erhältlich von Cognis oder unter dem Handelsnamen Ancarez^{™} AR555 Waterborne Epoxy Resin von Air Products.

Der Anteil der wässrigen Dispersion eines Epoxid-Festharzes beträgt vorzugsweise 30 bis 99 Gew.-%, insbesondere 40 bis 80 Gew.-%, bezogen auf die gesamte Haftvermittlerzusammensetzung.

Weiterhin umfasst die erfindungsgemässe Haftvermittlerzusammensetzung mindestens ein Polyamin.

Geeignete Polyamine sind beispielsweise beschrieben in der europäischen Patentanmeldung EP09178262.3, deren Inhalt hiermit durch Bezugnahme eingeschlossen wird.

Vorzugsweise ist das Polyamin ein Reaktionsprodukt, insbesondere ein Polyamidoamin oder ein Epoxidharz/Polyamin-Additionsprodukt.

Bevorzugt handelt es sich beim Polyamin um ein Polyamidoamin. Beispielsweise sind dies Kondensationsprodukte von Carbonsäuren mit Polyaminen, beispielsweise einer Fettsäure oder einer Polycarbonsäure mit einem Polyalkylenamin.

Besonders geeignete Polyamine sind Additionsprodukte von Epoxidharzen und Polyaminen. Derartige Additionsprodukte lassen sich beispielsweise aus einer Vielzahl möglicher dem Fachmann bekannter Polyamine und Epoxidharzen, insbesondere Bisphenol A-Diglycidylether, erhalten. Hierfür bevorzugte Polyamine sind Ethylendiamin, Isophorondiamin, 2,2,4- und 2,4,4-Trimethylhexamethylendiamin, 1,3-Xylylendiamin, Polyalkylenamine wie Polyethylenamine oder Polyoxyalkylendiamine oder -triamine, insbesondere wie sie unter dem Handelsnamen Jeffamine^{®} von Huntsman erhältlich sind. Bevorzugt handelt es sich beim Reaktionsprodukt um dasjenige eines Diglycidylethers von Bisphenol A und/oder Bisphenol F mit einem Polyoxyalkylendiamin oder Polyoxyalkylentriamin. Ein besonders geeignetes Additionsprodukt ist dasjenige, welches in EP 0567831 als Bis(diamin)-di-epoxidaddukt beschrieben ist.

Es ist durchaus möglich und kann sogar von Vorteil sein, eine Mischung verschiedener Polyamine in der erfindungsgemässen Haftvermittlerzusammensetzung einzusetzen. Gegebenenfalls können auch Mischungen von Polyaminen mit Mercaptogruppen aufweisenden Verbindungen eingesetzt werden.

Der Anteil des Polyamins ist insbesondere so gewählt, dass in der Haftvermittlerzusammensetzung ein Verhältnis von Aminogruppen zu Epoxidgruppen im Bereich von 0.1:1 bis 1:1 zustande kommt.

Vorzugsweise beträgt der Anteil des Polyamins 1 bis 40 Gew.-%, insbesondere 5 bis 20 Gew.-%, bezogen auf die gesamte Haftvermittlerzusammensetzung.

Weiterhin umfasst die erfindungsgemässe Haftvermittlerzusammensetzung mindestens eine Verbindung **V** in freier oder hydrolytisch freisetzbarer Form, welche mit dem Polyamin eine Kondensationsreaktion eingehen kann.

Insbesondere handelt es sich bei der Verbindung **V** um eine Carbonylverbindung. Als Carbonylverbindung bevorzugt sind Aldehyde, β-Diketone, β-Ketoester sowie β-Ketoamide.

Der Anteil der Verbindung **V** beträgt vorzugsweise 0.1 bis 10 Gew.-%, insbesondere 0.2 bis 5 Gew.-%, bezogen auf die gesamte Haftvermittlerzusammensetzung.

Geeignete Aldehyde sind einerseits bei Raumtemperatur flüssige Aldehyde, insbesondere Propanal, 2-Methylpropanal, Butanal, 2-Methylbutanal, 2-Ethylbutanal, Pentanal, Pivalaldehyd, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, 2,2-Dimethyl-3-phenylpropanal; 1-Naphthaldehyd, Benzaldehyd oder substituierte Benzaldehyde, insbesondere die isomeren Tolualdehyde, Salicylaldehyd und m-Phenoxy-benzaldehyd; und Zimtaldehyd.

Als Aldehyd insbesondere geeignet sind andererseits Aldehyde der Formel (II).

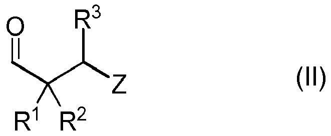

Dabei stehen R¹ und R² entweder unabhängig voneinander jeweils für einen einwertigen Kohlenwasserstoffrest mit 1 bis 12 C-Atomen, oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist. Bevorzugt stehen R¹ und R² jeweils für einen Methylrest.

R³ steht weiterhin für ein Wasserstoffatom oder für eine Arylalkyl- oder Cycloalkyl- oder Alkylgruppe mit 1 bis 12 C-Atomen, insbesondere für ein Wasserstoffatom.

Z steht für eine Ester-, Ether-, tertiäre Amino- oder Amidogruppe mit bis zu 31 C-Atomen, wobei diese gegebenenfalls zusätzliche Ethersauerstoffatome aufweisen. Bevorzugt steht Z für einen Rest der Formel (III) oder (IV),

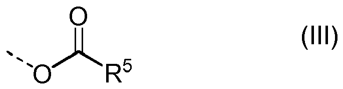

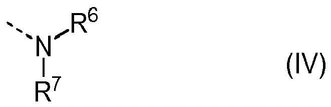

R⁵ steht dabei entweder für ein Wasserstoffatom oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen.

Weiterhin kann R⁵ für einen einfach oder mehrfach ungesättigten, linearen oder verzweigten Kohlenwasserstoffrest mit 5 bis 30 C-Atomen stehen oder für einen, gegebenenfalls substituierten, aromatischen oder heteroaromatischen 5- oder 6-gliedrigen Ring.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

R⁶ und R⁷ stehen jeweils unabhängig voneinander für ein Wasserstoffatom, eine Alkyl-, Cycloalkyl-, Aryl- oder Arylalkylgruppe mit 1 bis 12 C-Atomen, welche gegebenenfalls Ethergruppen oder Halogenatome aufweist oder zusammen für einen zweiwertigen Kohlenwasserstoffrest, der Teil eines, gegebenenfalls substituierten, carbocylischen Rings mit 5 bis 8, bevorzugt 5 oder 6, C-Atomen ist

Bevorzugt stehen R⁶ und R⁷ jeweils unabhängig voneinander für eine Methyl-, Ethyl-, Propyl-, Isopropyl-, Butyl-, Isobutyl-, 2-Ethylhexyl-, Cyclohexyl-, Benzyl-oder Alkoxyethylgruppe, oder sie bilden zusammen - unter Einbezug des Stickstoffatoms - einen Ring, insbesondere einen Pyrrolidin-, Piperidin-, Morpholin- oder N-Alkylpiperazinring, wobei dieser Ring gegebenenfalls substituiert ist. Besonders bevorzugt stehen R⁶ und R⁷ jeweils unabhängig voneinander für eine Benzyl- oder Methoxyethylgruppe, oder bilden zusammen unter Einbezug des Stickstoffatoms einen Morpholinring.

Bevorzugt sind Aldehyde der Formel (II), welche bei Raumtemperatur flüssig sind.

Aldehyde der Formel (II), welche als Rest Z einen Rest der Formel (III) aufweisen, stellen Ester von aliphatischen, cycloaliphatischen oder arylaliphatischen 2,2-disubstituierten 3-Hydroxyaldehyden, wie insbesondere 2,2-Dimethyl-3-hydroxypropanal, mit geeigneten Carbonsäuren dar, wobei als Carbonsäuren insbesondere die Folgenden geeignet sind: gesättigte aliphatische Carbonsäuren, wie insbesondere Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure, arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit 12 bis 31 C-Atomen, insbesondere Laurinsäure, Myristinsäure, Palmitinsäure, Stearinsäure und Ölsäure. Besonders bevorzugt ist Laurinsäure.

Bevorzugt ist der Aldehyd ausgewählt aus der Gruppe bestehend aus 2-Ethylbutanal, Pentanal, Pivalaldehyd, 2-Methylpentanal, 3-Methylpentanal, 4-Methylpentanal, 2,3-Dimethylpentanal, Hexanal, 2-Ethyl-hexanal, Heptanal, Octanal, Methoxyacetaldehyd, 2,2-Dimethyl-3-phenylpropanal, Benzaldehyd, 1-Naphthaldehyd, Salicylaldehyd und Aldehyde der Formel (II), insbesondere 3-Acetoxy-2,2-dimethylpropanal, 2,2-Dimethyl-3-lauroyloxypropanal, 2,2-Dimethyl-3-(N-morpholino)-propanal und 2,2-Dimethyl-3-bis-(methoxyethyl)-amino-propanal.

Besonders bevorzugt ist der Aldehyd ausgewählt aus der Gruppe bestehend aus Benzaldehyd, Salicylaldehyd, 2,2-Dimethyl-3-phenylpropanal, 3-Acetoxy-2,2-dimethylpropanal, 2,2-Dimethyl-3-lauroyloxypropanal und 2,2-Dimethyl-3-(N-morpholino)-propanal.

Als Aldehyd speziell bevorzugt sind Aldehyde der Formel (II), welche als Rest Z einen Rest der Formel (III) aufweisen, worin R⁵ 11 bis 30 C-Atome, insbesondere 11 bis 20 C-Atome, aufweist. Meist bevorzugt ist 2,2-Dimethyl-3-lauroyloxypropanal.

Bei diesen Aldehyden handelt es sich um geruchsfreie Substanzen. Unter einer "geruchsfreien" Substanz wird eine Substanz verstanden, die für die meisten menschlichen Individuen nicht riechbar ist, die also keinen wahrnehmbaren Geruch aufweist. Beim Einsatz derartiger Aldehyde sind Haftvermittlerzusammensetzungen zugänglich, welche geruchsfrei sind und keine VOC freisetzen.

Als β-Diketon eignen sich insbesondere solche der Formel (V)

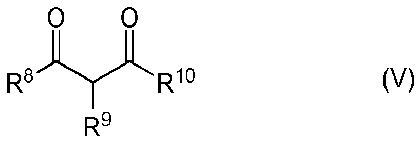

Einerseits stehen dabei R⁸ und R¹⁰ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, und R⁹ steht für ein Wasserstoffatom oder für eine Alkyl-, Cycloalkyl-, Aryl- oder Arylalkylgruppe mit 1 bis 12 C-Atomen.

Andererseits stehen R⁸ und R⁹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, und R¹⁰ steht für eine Alkyl-, Cycloalkyl-, Aryl- oder Arylalkylgruppe mit 1 bis 12 C-Atomen, welche gegebenenfalls Ethergruppen oder Halogenatome aufweist.

Bevorzugte β-Diketone der Formel (V) sind insbesondere ausgewählt aus der Gruppe bestehend aus 2,4-Pentandion, in 3-Stellung alkyliertes 2,4-Pentandion, also insbesondere 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 1,1,1-Tri-fluoro-2,4-pentandion, 1,1,1,5,5,5-Hexafluoro-2,4-pentandion, 3,5-Heptandion, 3,5-Octandion, 2,4-Octandion, 6-Methyl-3,5-heptandion, 2,2,6,6-Tetramethyl-3,5-heptandion, 2,2,4,6,6-Pentamethyl-3,5-heptandion, 1-Phenyl-1,3-butan-dion, 2-Acetylcyclopentanon, 2-Acetylcyclohexanon, 2-Benzoyl-cyclopentanon und 2-Benzoyl-cyclohexanon.

Besonders bevorzugt ist 2,4-Pentandion.

Als β-Ketoester geeignet sind insbesondere β-Ketoester der Formel (VI).

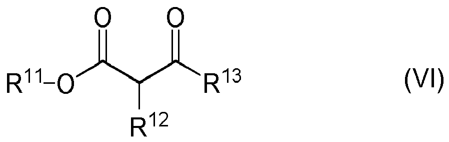

R¹¹ steht für eine lineare oder verzweigte Alkylgruppe mit 1 bis 6 C-Atomen, vorzugsweise für eine tert.-Butylgruppe.

R¹² und R¹³ stehen unabhängig voneinander jeweils für ein Wasserstoffatom, eine Alkyl-, Cycloalkyl-, Aryl- oder Arylalkylgruppe mit 1 bis 12 C-Atomen, welche gegebenenfalls Ethergruppen oder Halogenatome aufweist oder zusammen für einen zweiwertigen Kohlenwasserstoffrest, der Teil eines, gegebenenfalls substituierten, carbocylischen Rings mit 5 bis 8, bevorzugt 5 oder 6, C-Atomen ist. Insbesondere steht R¹² für ein Wasserstoffatom und R¹³ für eine Methylgruppe.

Als β-Ketoamide eignen sich insbesondere β-Ketoamide der Formel (VII).

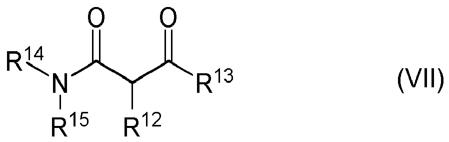

R¹² und R¹³ entsprechen dabei unabhängig den Resten, wie sie vorhergehend bei β-Ketoestern der Formel (VI) worden sind.

R¹⁴ und R¹⁵ stehen jeweils unabhängig voneinander für ein Wasserstoffatom, eine Alkyl-, Cycloalkyl-, Aryl- oder Arylalkylgruppe mit 1 bis 12 C-Atomen, welche gegebenenfalls Ethergruppen oder Halogenatome aufweist oder zusammen für einen zweiwertigen Kohlenwasserstoffrest, der Teil eines, gegebenenfalls substituierten, carbocylischen Rings mit 5 bis 8, bevorzugt 5 oder 6, C-Atomen ist

Bei der Verbindung **V** kann es sich auch um eine mehrfunktionelle Verbindung handeln, welche zwei oder mehr der in den vorhergehend beschriebenen Carbonylverbindung enthaltenen Carbonylgruppen aufweist, wobei diese Carbonylgruppen innerhalb eines Moleküls nicht zwingend identisch sein müssen. Beispielsweise eignet sich als Verbindung **V** ein Dialdehyd wie Terephthalaldehyd oder ein Polyol, dessen Hydroxylgruppen vollständig acetoacetyliert sind.

Die Verbindung **V** kann statt in freier Form auch in hydrolytisch freisetzbarer Form in der Haftvermittlerzusammensetzung enthalten sein.

Als Verbindungen, welche eine Verbindung **V** nach der Hydrolyse freisetzen, eignen sich insbesondere Aldimine, Enamine oder Oxazolidine.

Bevorzugt handelt es sich bei der Verbindung **V** in hydrolytisch freisetzbarer Form um ein Aldimin der Formel (VIII),

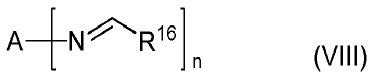

Dabei steht n für einen Wert von 1 bis 4, insbesondere für 2 oder 3.

A steht für einen n-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält.

Insbesondere steht A für einen Rest eines Amins nach Entfernung von n Aminogruppen. Bevorzugte Amine sind dabei ausgewählt aus der Gruppe bestehend aus 1,6-Hexamethylendiamin, 1,5-Diamino-2-methylpentan, 1,3-Pentandiamin, Isophorondiamin, 2,2,4- und 2,4,4-Trimethylhexamethylendiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxa-decan-1,10-diamin, 4-Aminomethyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine^{®} erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Amine.

R¹⁶ steht für einen Rest eines Aldehyds, wie er vorhergehend beschrieben worden ist, nach Entfernung der Aldehydgruppe.

Weitere geeignete Aldimine sind beispielsweise als Polyaldimine PA beschrieben in WO 2010/112537. Als Aldimin ebenfalls geeignet sind kommerzielle Aldimine, wie beispielsweise Vestamin^{®} A-139 (von Evonik).

Weiterhin bevorzugt handelt es sich bei der Verbindung **V** in hydrolytisch freisetzbarer Form um ein Enamin. Ein solches Enamin ist insbesondere erhältlich aus der Kondensationsreaktion von einem mindestens eine sekundäre Aminogruppe aufweisenden Amin mit mindestens einem Aldehyd, welcher in α-Stellung zur Carbonylgruppe mindestens ein Wasserstoffatom aufweist und damit enolisierbar ist, insbesondere Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarboxaldehyd, Cyclopentancarboxaldehyd, Cyclohexancarboxaldehyd oder Diphenylacetaldehyd. Als mindestens eine sekundäre Aminogruppe aufweisendes Amin geeignet sind einerseits Amine mit mindestens zwei sekundären Aminogruppen, insbesondere Piperazin, 2,5- und 2,6-Dimethylpiperazin, 2,3,5,6-Tetramethylpiperazin, 1,7-Dioxa-4,10-diazacyclododecan, N,N'-Dibutylethylendiamin; N,N'-Di-tert.butyl-ethylendiamin, N,N'-Dimethyl-1,6-hexandiamin, N,N'-Diethyl-1,6-hexandiamin, N,N'-Dimethyl-diethylentriamin, N,N'-Dimethyl-dipropylentriamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylendipiperidin und N-alkylierte Polyetheramine, beispielsweise Jeffamine^{®}-SD-231 (von Huntsman); weiterhin Amine mit einer Hydroxylgruppe und einer sekundären Aminogruppe, insbesondere N-(2-Hydroxyethyl)-piperazin, 4-Hydroxy-piperidin, sowie monoalkoxylierte primäre Monoamine, wie insbesondere N-Methyl-ethanolamin, N-Ethyl-ethanolamin, N-Butylethanolamin und N-Butyl-isopropanolamin; weiterhin Amine mit einer Mercaptogruppe und einer sekundären Aminogruppe, insbesondere N-(2-Mercaptoethyl)-piperazin, 4-Mercapto-piperidin und 2-Mercaptoethyl-butylamin.

Weiterhin bevorzugt handelt es sich bei der Verbindung **V** in hydrolytisch freisetzbarer Form um ein Oxazolidin. Ein solches Oxazolidin ist insbesondere erhältlich aus der Kondensationsreaktion von mindestens einem Hydroxyamin, in welchem die Hydroxyl- und die primäre oder sekundäre Aminogruppe durch einen, gegebenenfalls substituierten, Ethylen- oder Propylenrest getrennt sind, mit mindestens einem Aldehyd, insbesondere Formaldehyd oder einem der oben genannten enolisierbaren Aldehyde. Besonders geeignet sind 2-Methylpropanal und 2-Ethylhexanal. Als Hydroxyamin geeignet sind insbesondere Diethanolamin und Diisopropanolamin, die zu Hydroxyoxazolidinen führen, aus welchen leicht Polyoxazolidine hergestellt werden können, beispielsweise durch Umsetzung mit einem Polyisocyanat oder einem Polyester.

Geeignete kommerzielle Oxazolidine sind beispielsweise Härter OZ und Desmophen^{®} VP LS 2959 (von Bayer), Zoldine^{®} ZA-78 und Zoldine^{®} ZE (von Dow Chemical), Zoldine^{®} RD-4 und Zoldine^{®} RD-20 (von Angus Chemie), sowie Incozol^{®} 2, Incozol^{®} 3, Incozol^{®} LV, Incozol^{®} 4, Incozol^{®} HP, Incozol^{®} CF, Incozol^{®} NC und Incozol^{®} K (von Incorez).

In einer bevorzugten Ausführungsform der erfindungsgemässen Haftvermittlerzusammensetzung ist die Verbindung **V** in hydrolytisch freisetzbarer Form in der Haftvermittlerzusammensetzung enthalten. Als Verbindungen, welche die Verbindung **V** nach der Hydrolyse freisetzen, sind Aldimine, Enamine und Oxazolidine meist bevorzugt.

Diese bevorzugte Ausführungsform hat den Vorteil, dass die Verbindung **V** bei der Anwendung der Haftvermittlerzusammensetzung verzögert freigesetzt wird und dadurch eine ungestörte Aushärtung des Epoxid-Festharzes mit dem Polyamin gewährleistet.

Die erfindungsgemässe Haftvermittlerzusammensetzung enthält bevorzugt weitere Inhaltsstoffe, wie sie in Haftvermittlerzusammensetzungen üblich und beispielsweise in WO 2008/037780 beschrieben sind, insbesondere Verbindungen, wie sie darin beschrieben sind als Epoxysilan ES oder ESx, Aminosilane AS oder ASx oder Mercaptosilane MS.

Besonders bevorzugt enthält die Haftvermittlerzusammensetzung Silane, gegebenenfalls zumindest teilweise in Form ihrer Siloxane, sowie Pigmente. Bevorzugte Silane sind Epoxysilane, insbesondere 3-Glycidoxypropylsilane, und Aminosilane, insbesondere 3-Aminopropylsilane und N-(2-Aminoethyl)-3-aminopropylsilane, Addukte aus Epoxysilanen und Aminosilanen, sowie Mercaptosilane, insbesondere 3-Mercaptopropylsilane.

Bevorzugte Pigmente sind Eisenpigmente und insbesondere Russ.

Die erfindungsgemässe Haftvermittlerzusammensetzung wird insbesondere als Zweikomponentensystem eingesetzt, wobei die wässrige Dispersion des Epoxid-Festharzes in der ersten Komponente und das Polyamin in der zweiten Komponente enthalten sind. Die Verbindung **V** kann in der ersten oder in der zweiten Komponente oder in beiden Komponenten enthalten sein. Gegebenenfalls kann die Verbindung **V** auch als separate Komponente, d.h. als dritte Komponente, gehandhabt werden. Falls sie in der zweiten Komponente enthalten ist, reagiert sie zumindest teilweise mit Aminogruppen des Polyamins, wobei die entsprechenden Kondensationsprodukte entstehen.

Bevorzugt ist die Haftvermittlerzusammensetzung eine zweikomponentige Haftvermittlerzusammensetzung bestehend aus einer ersten Komponente **K1** enthaltend
- mindestens eine wässrige Dispersion eines Epoxid-Festharzes; sowie
- mindestens eine Verbindung **V** in freier oder hydrolytisch freisetzbarer

Form, welche mit dem Polyamin eine Kondensationsreaktion eingehen kann; und
einer zweiten Komponente **K2** enthaltend
- mindestens ein Polyamin.

Weiterhin bevorzugt ist die Haftvermittlerzusammensetzung eine zweikomponentige Haftvermittlerzusammensetzung bestehend aus einer ersten Komponente **K1** enthaltend
- mindestens eine wässrige Dispersion eines Epoxid-Festharzes; und einer zweiten Komponente **K2** enthaltend
- mindestens ein Polyamin; sowie
- mindestens eine Verbindung **V** in hydrolytisch freisetzbarer Form, welche mit dem Polyamin eine Kondensationsreaktion eingehen kann.

Die einzelnen Komponenten werden nach der Herstellung typischerweise getrennt voneinander in dichte Verpackungen verpackt. Die einzelnen Komponenten sind getrennt voneinander lagerstabil. Die Lagerung der erfindungsgemässen Haftvermittlerzusammensetzung erfolgt insbesondere bei Temperaturen im Bereich von 5 bis 30 °C. Dies gewährleistet die Stabilität der wässrigen Dispersion des Epoxid-Festharzes.

Weiterhin betrifft die vorliegende Erfindung die Verwendung einer Haftvermittlerzusammensetzung, wie sie vorhergehend beschrieben worden ist, als Voranstrich für Klebstoffe, Dichtstoffe oder Beschichtungen.

Die Verwendung einer derartigen Haftvermittlerzusammensetzung verbessert die Haftung des Klebstoffs, Dichtstoffs oder der Beschichtung bei feuchtwarmen Bedingungen, insbesondere nach Kataplasma-Lagerung. Vorzugsweise wird die Haftvermittlerzusammensetzung als Voranstrich für Kleb- oder Dichtstoffe verwendet.

Die Applikation der erfindungsgemässen Haftvermittlerzusammensetzung erfolgt typischerweise mittels Tuch, Filz, Rolle, Sprühen, Schwamm, Pinsel, Tauchbeschichten oder dergleichen und kann sowohl manuell als auch mittels Roboter erfolgen.

Handelt es sich bei der Haftvermittlerzusammensetzung um eine mehrkomponentige Haftvermittlerzusammensetzung, erfolgt vor oder während der Applikation das Mischen der Komponenten.

Nach der Applikation erfolgt üblicherweise das Ablüften der Haftvermittlerzusammensetzung. Das Ablüften kann unter atmosphärischen Bedingungen oder allenfalls bei erhöhter Temperatur, Unterdruck und/oder durch Anblasen mit einem Gas erfolgen, was zu einer Verkürzung der Ablüftzeit führen kann.

Die erfindungsgemässe Haftvermittlerzusammensetzung eignet sich für verschiedenartige Substrate wie beispielsweise Metalle und Legierungen, insbesondere Stähle, Aluminium und Buntmetalle sowie deren Legierungen, Beton, Mörtel, Backstein, Klinker, Naturstein, Glas, Glaskeramik, Holz und Kunststoffe wie Polystyrol. Als Substrate bevorzugt sind anorganische Substrate, insbesondere Glas und Glaskeramik sowie Beton und Mörtel.

Die Substrate können bei Bedarf vor dem Applizieren der erfindungsgemässen Haftvermittlerzusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

Als Kleb- oder Dichtstoff kann grundsätzlich jeder übliche Kleb- oder Dichtstoff verwendet werden. Insbesondere handelt es sich dabei um einen feuchtigkeitshärtenden Kleb- oder Dichtstoff.

Geeignete Kleb- und Dichstoffe sind insbesondere Polyurethankleb- und -dichtstoffe, insbesondere solche, welche Isocyanatgruppen aufweisende Polyurethanpolymere enthalten.

Weiterhin eignet sich die erfindungsgemässe Haftvermittlerzusammensetzung insbesondere auch für silanvernetzende Kleb- und Dichtstoffe.

Besonders geeignet ist die erfindungsgemässe Haftvermittlerzusammensetzung für elastische feuchtigkeitshärtende Klebstoffe, wie sie unter den Produktelinien Sikaflex^{®} und SikaBond^{®} von Sika Schweiz AG kommerziell vertrieben werden.

Bevorzugte Anwendungsgebiete der erfindungsgemässen Haftvermittlerzusammensetzung liegen in der Bau- und Fertigungsindustrie sowie im Fahrzeugbau, insbesondere zur Fugenabdichtung, Parkettverklebung, Anbauteilverklebung, Nahtabdichtung, Hohlraumversiegelung, Montage, Karosserieverklebung, Scheibenverklebung und dergleichen.

Artikel, welche aus dem Verkleben, Abdichten oder Beschichten eines Substrats unter Verwendung einer erfindungsgemässen Haftvermittlerzusammensetzung hervorgehen, sind beispielsweise Bauwerke, insbesondere Bauwerke des Hoch- oder Tiefbaus, Transportmittel, beispielsweise Fahrzeuge, insbesondere Automobile, Busse, Lastkraftwagen, Schienenfahrzeuge oder Schiffe, oder Anbauteile davon. Bevorzugt wird die erfindungsgemässe Haftvermittlerzusammensetzung eingesetzt für elastische Verklebungen im Fahrzeugbau, wie beispielsweise das Ankleben von Teilen, wie Kunststoffabdeckungen, Zierleisten, Flansche, Stossstangen, Führerkabinen oder andere Anbauteile, an die lackierte Karosserie eines Transportmittels, oder das Einkleben von Scheiben in die Karosserie.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung von Verbindungen V

### Verbindung V1:

100 g eines Polypropylenglykols (PPG 400; Voranol^{®} P400, Dow) wurden in einem Kolben mit 80 g tert.Butylacetoacetat vermischt und die Mischung unter Rühren und Vakuum auf 130 °C erwärmt, bis in der Vorlage kein tert.Butanol mehr kondensierte (ca. 4 Stunden). Ausbeute: 138 g.

### Verbindung V2:

Kommerzielles Oxazolidin Incozol^{®} 2 (von Incorez).

### Herstellung der Haftvermittlerzusammensetzungen

### Beispiele 1 und 2

Als Komponente **K1** wurde mit Ancarez™ AR555 (von Air Products; 55 Gew.-% Festkörpergehalt) eine kommerzielle wässrige Dispersion eines Epoxid-Festharzes eingesetzt.

Als Komponente **K2** wurde mit Anquamine^{®} 419 (von Air Products; 60 Gew.-% Festkörpergehalt) ein kommerzieller wässriger Aminhärter eingesetzt, der mit deionisiertem Wasser auf einen Festkörpergehalt von 17 Gew.-% verdünnt wurde.

Für jedes Beispiel wurde jeweils zu einer der beiden Komponenten **K1** oder **K2** gemäss Tabelle 1 eine Verbindung **V** zugegeben.

**Tabelle 1. Haftvermittlerzusammensetzungen (Mengenangaben in Gewichtsteilen)**

| | Referenz | **Beispiel 1** | **Beispiel 2** |
|---|---|---|---|
| Komponente **K1** | | | |
| Ancarez™ AR555 | 50 | 48.5 | 50 |
| Verbindung V1 | | 1.5 | |

| Komponente **K2** | | | |
|---|---|---|---|
| Anquamine^{®} 419 | 14.2 | 14.2 | 12.8 |
| deionis. Wasser | 35.8 | 35.8 | 32.2 |
| Verbindung V2 | | | 5 |

### Herstellung von Verklebungen

Zur Applikation der Haftvermittlerzusammensetzungen wurden für jedes Beispiel jeweils 50 Gewichtsteile der Komponente **K1** und 50 Gewichtsteile der Komponente **K2** zusammengemischt, die Mischung mittels eines damit getränkten Filzes auf das Substrat (Floatglas von Rocholl GmbH, Deutschland; Zinnseite) aufgetragen und während 60 Minuten im "Normklima" (23±1 °C, 50±5% relative Luftfeuchtigkeit) abgelüftet.

Auf das so vorbehandelte Substrat wurde der kommerzielle einkomponentige Polyurethanklebstoff Sikaflex^{®}-221 (von Sika Schweiz AG) mittels einer Kartuschenpistole als Dreiecksraupe im Normklima aufgetragen. Der Klebstoff wurde nach einer Aushärtezeit von 7 Tagen im Normklima ("RT") sowie nach einer anschliessenden Kataplasma-Lagerung von 7 Tagen ("CP") auf Haftung geprüft.

Die Haftung des Klebstoffs wurde mittels Raupentest bestimmt. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche in Prozenten. Der Zusatz "P" in der Wertung bezeichnet dabei eine Ablösung des Haftvermittlers bzw. Primers vom Untergrund oder einen kohäsiven Bruch im Haftvermittler. Je höher der Anteil an kohäsivem Bruch im Klebstoff ist, umso besser wird die Verklebung eingeschätzt. Testresultate mit Kohäsionsbrüchen von weniger als 50%, insbesondere weniger als 40%, gelten als ungenügend.

Die Ergebnisse sind in der Tabelle 2 angegeben.

**Tabelle 2. Haftungsergebnisse**

| | Haftung nach RT | Haftung nach CP |
|---|---|---|
| Referenz | 100 | 0P |
| **Beispiel 1** | 100 | 100 |
| **Beispiel 2** | 100 | 90P |

## Patentansprüche

1. Haftvermittlerzusammensetzung enthaltend
- mindestens eine wässrige Dispersion eines Epoxid-Festharzes;
- mindestens ein Polyamin; sowie
- mindestens eine Verbindung **V** in freier oder hydrolytisch freisetzbarer Form, welche mit dem Polyamin eine Kondensationsreaktion eingehen kann.

2. Haftvermittlerzusammensetzung gemäss Anspruch 1, **dadurch gekennzeichnet, dass** die wässrige Dispersion eines Epoxid-Festharzes einen Gehalt an Epoxid-Festharz von 30 bis 80 Gew.-% aufweist.

3. Haftvermittlerzusammensetzung gemäss einem der Ansprüche 1 oder 2, **dadurch gekennzeichnet, dass** die mittlere Teilchengrösse der dispergierten Partikel aus Epoxid-Festharz in der Dispersion im Bereich von 0.05 bis 20 µm liegt.

4. Haftvermittlerzusammensetzung gemäss einem der vorhergehenden Ansprüche, **dadurch gekennzeichnet, dass** der Anteil der wässrigen Dispersion eines Epoxid-Festharzes 30 bis 99 Gew.-% bezogen auf die gesamte Haftvermittlerzusammensetzung beträgt.

5. Haftvermittlerzusammensetzung gemäss einem der vorhergehenden Ansprüche, **dadurch gekennzeichnet, dass** die Verbindung **V** in hydrolytisch freisetzbarer Form in der Haftvermittlerzusammensetzung enthalten ist.

6. Haftvermittlerzusammensetzung gemäss Anspruch 5, **dadurch gekennzeichnet, dass** die Verbindung, welche die Verbindung **V** nach der Hydrolyse freisetzt, ein Aldimin, ein Enamin oder ein Oxazolidin ist.

7. Haftvermittlerzusammensetzung gemäss einem der vorhergehenden Ansprüche, **dadurch gekennzeichnet, dass** der Anteil des Polyamins so gewählt, dass in der Haftvermittlerzusammensetzung ein Verhältnis von Aminogruppen zu Epoxidgruppen im Bereich von 0.1:1 bis 1:1 zustande kommt.

8. Haftvermittlerzusammensetzung gemäss einem der vorhergehenden Ansprüche, **dadurch gekennzeichnet, dass** der Anteil der Verbindung **V** 0.1 bis 10 Gew.-% bezogen auf die gesamte Haftvermittlerzusammensetzung beträgt.

9. Haftvermittlerzusammensetzung gemäss einem der Ansprüche 1 bis 8, **dadurch gekennzeichnet, dass** die Haftvermittlerzusammensetzung eine zweikomponentige Haftvermittlerzusammensetzung ist, bestehend aus einer ersten Komponente **K1** enthaltend
- mindestens eine wässrige Dispersion eines Epoxid-Festharzes; sowie
- mindestens eine Verbindung **V** in freier oder hydrolytisch freisetzbarer Form, welche mit dem Polyamin eine Kondensationsreaktion eingehen kann; und
einer zweiten Komponente **K2** enthaltend
- mindestens ein Polyamin.

10. Haftvermittlerzusammensetzung gemäss einem der Ansprüche 1 bis 8, **dadurch gekennzeichnet, dass** die Haftvermittlerzusammensetzung eine zweikomponentige Haftvermittlerzusammensetzung ist, bestehend aus einer ersten Komponente **K1** enthaltend
- mindestens eine wässrige Dispersion eines Epoxid-Festharzes; und einer zweiten Komponente **K2** enthaltend
- mindestens ein Polyamin; sowie
- mindestens eine Verbindung **V** in hydrolytisch freisetzbarer Form, welche mit dem Polyamin eine Kondensationsreaktion eingehen kann.

11. Verwendung einer Haftvermittlerzusammensetzung gemäss einem der Ansprüche 1 bis 10 als Voranstrich für Klebstoffe, Dichtstoffe oder Beschichtungen.

12. Verwendung gemäss Anspruch 11, **dadurch gekennzeichnet, dass** der Kleb- oder Dichtstoff ein Polyurethankleb- und -dichtstoff ist.
